# EUROPEAN PATENT SPECIFICATION

(11) **EP 1 908 548 B1**
(45) Date of publication and mention of the grant of the patent: **02.09.2009**
(21) Application number: 07019183.8
(22) Date of filing: 28.09.2007
(51) Int. Cl.: B23P 21/00, B23Q 39/04, B23Q 7/00

(54) **Working and mounting machine for small parts**
Bearbeitungs- und Montagemaschine für kleine Teile
Machine de travail et de montage pour pièces de petite taille

(30) Priority: 04.10.2006 IT MI20061905
(43) Date of publication of application: 09.04.2008
(73) Proprietor: COSBERG SPA, 24030 Terno d'Isola (BG) (IT)
(72) Inventor: Viscardi, Gianluigi Carlo, 24039 Sotto il Monte Giovanni XXIII BG (IT)
(74) Representative: Faraggiana, Vittorio

(56) References cited:
- DE-A1- 10 241 736
- DE-A1- 10 343 378
- DE-A1- 19 842 999
- US-A- 4 570 782
- US-A- 5 950 503
- DATABASE WPI Week 200747 Derwent Publications Ltd., London, GB; AN 2007-479865 XP002466130 & JP 2007 168038 A (NISSAN MOTOR CO LTD) 5 July 2007 (2007-07-05)

## Description

The present invention relates to an assembling machine for small parts, such as furniture hinges, switches, etc., for example, comprising a succession of working and mounting stations.

Known in the art are assembling machines formed with a straight transport line along which working and mounting stations are disposed in succession. The transport line carries loading units in succession to the different stations. These machines have a high extension in length and a great bulkiness and are uncomfortable for the personnel entrusted with supervision of same.

To obviate the above disadvantages, the so-called "rotarytable machines" have been used for long, in which a rotary table is present around which the working and mounting stations are disposed. The table is provided with supports distributed along its periphery to carry the items to be worked and is powered for rotating around its axis stepwise so that at each step the supports face a subsequent station around the disc. While these machines have a reduced bulkiness as compared with straight machines, they have a great number of disadvantages. For instance, they have reduced flexibility, since at each rotation step all the different supports move simultaneously from a station to the subsequent one and the stations must be all equally distributed around the rotary table. Therefore, stations with shorter working schedules must wait for completion of the operations in stations with longer working schedules. In addition, many problems exist for location of the stations, above all when stations of very different bulkiness with respect to each other are concerned.

In DE-A-103 43 378 and US 4, 570, 782 working machines have been proposed, which have a circular transport line with stop units disposed along its circumference to selectively stop the loading units relative to the transport line.

The present invention generally aims at obviating the above mentioned drawbacks by providing an assembling machine for small parts offering high flexibility and reduced bulkiness.

In view of the above aim, in accordance with the invention, an assembling machine has been conceived having the features mentioned in claim 1.

For better clarifying the innovative principles of the present invention and the advantages it offers over the known art, a possible exemplary embodiment applying said principles will be described hereinafter, with the aid of the accompanying drawings. In the drawings:
- Fig. 1 represents a diagrammatic perspective view of a machine manufactured following the principles of the invention;
- Fig. 2 is a partial cross-section view, taken along line II-II in Fig. 1;
- Fig. 3 is a partial cross-section view, taken along line III-III in Fig. 1;
- Fig. 4 is a perspective diagrammatic view to an enlarged scale of a lifting and centring unit at a working station.

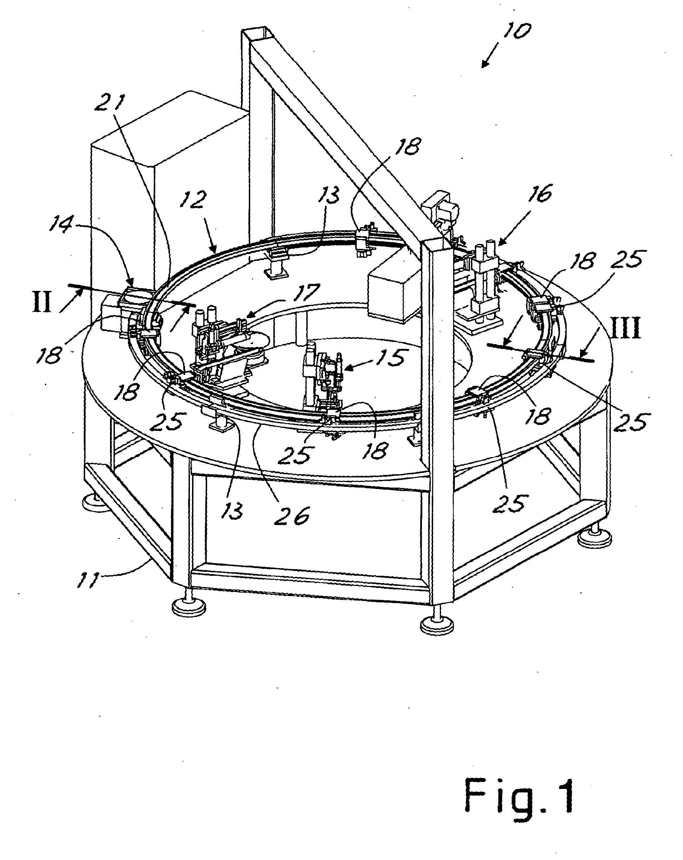

With reference to the drawings, diagrammatically shown in perspective view in Fig. 1 is a machine generally denoted at 10, made following the principles of the present invention.

Machine 10 comprises a base 11 on which a circular conveyor is mounted which is embodied by a transport ring 12. Ring 12 is in turn supported by sliding supports 13 to horizontally rotate around its axial centre by means of a power unit 14. Disposed along the annular rotation path of ring 12 are known working and mounting stations 15, 16, 17. Any type and number of stations can be provided, depending on specific requirements. By way of example, stations 15, 16, 17 with a known vibrator feeder to supply items to a mounting unit are shown in the figure.

Loading units 18 are disposed and rest on the rotating ring to be driven in a circular motion between the stations by the ring. Each loading unit will comprise thereon known and suitable fastening equipment for the items to be worked.

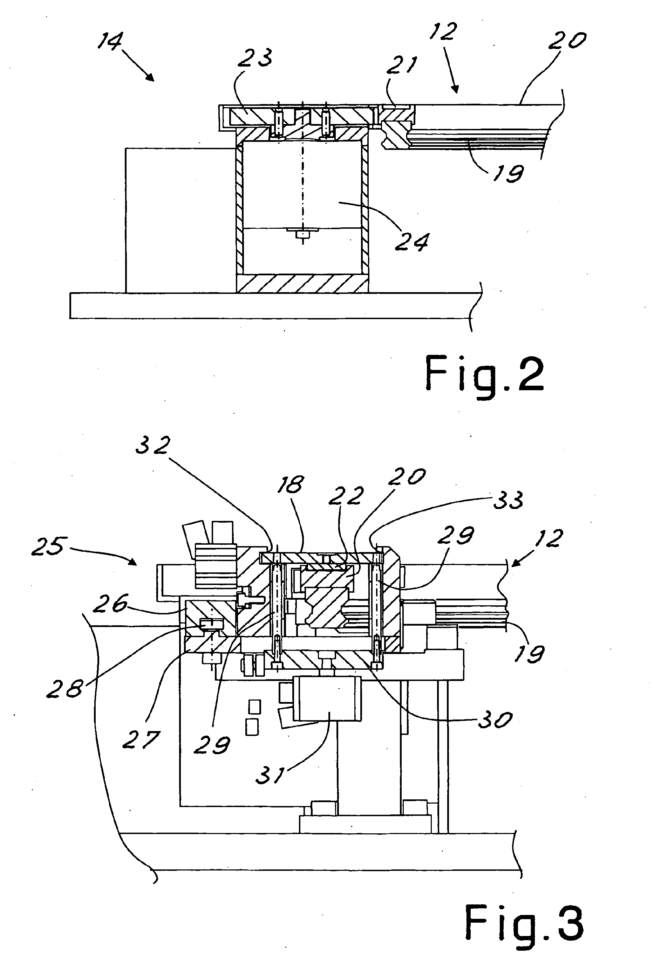

Shown in Fig. 2 is a cross section of the ring-shaped transport element 12, close to the power unit 14. Element 12 advantageously comprises a circular guide 19 shaped in such a manner as to enable it to be carried by supports 13 (in the form of ball bearings) for a guided circular movement with minimum side play. Mounted over guide 19 is an annular element 20 on which the loading units rest. Advantageously, the annular element 20 has a guide groove 21 on top, in which a foot 22 projecting downwards from each loading unit is inserted with a small side play.

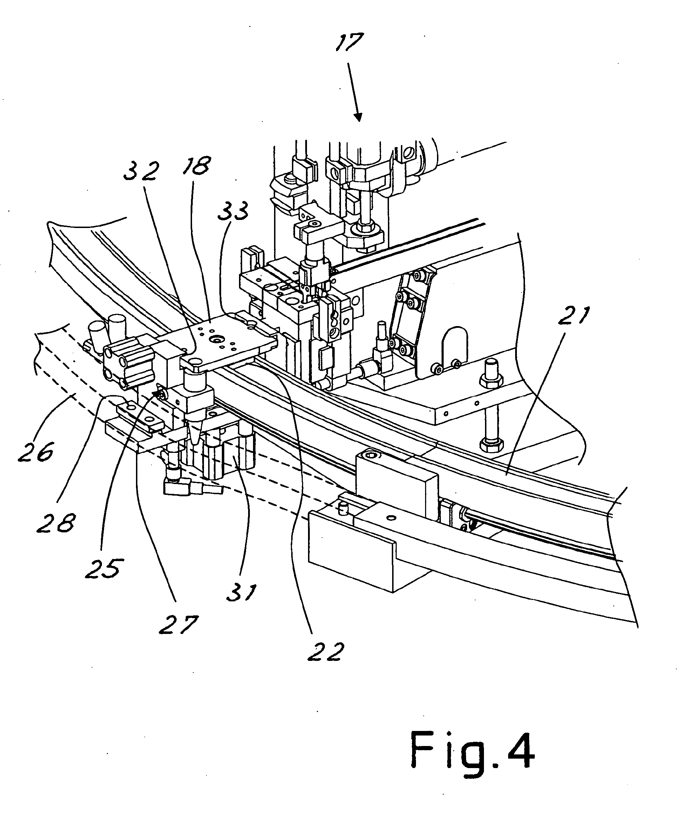

One of the stop units 25 is shown in section view in Fig. 3; said units 25 are disposed around the ring to lift a loading unit upon command so as to stop movement of same at the stations. A perspective view to an enlarged scale of the release unit at a mounting station is shown in Fig. 4. As viewed from the figures, the stop units 25 are advantageously supported on a bar 26 (partly shown in chain line in Fig. 4) disposed around the annular conveyor 12, so that the position of the stop units around the ring can be finely adjusted depending on requirements.

As clearly shown in the figures, the stop unit comprises a frame 27 that can be clamped on bar 26 by suitable locking means 28 (of the screw-threaded type, for example). As visible in Fig. 3, lifting means for movement of the loading unit is disposed on frame 27, said means consisting of two vertical centring members 29. The centring members are fastened at the lower part thereof to a plate 30 to be vertically moved by means of a motor 31, so as to lift the loading unit and push it against an upper abutment 32, 33 of frame 27 on the two sides of the ring-shaped conveyor. Several sensors of known type can be provided to detect passage of the loading unit and correct positioning of same in the stop unit.

At this point it is apparent that the intended purposes are reached. With the machine in accordance with the invention, the loading units are not necessarily obliged to move stepwise all simultaneously, but some of them can be stationary in respective lifting units while others are rotating. In addition, the loading units can also arrange themselves behind each other and vary their mutual distance.

The number and type of stations and loading units can vary depending on requirements, as can be easily understood by a person skilled in the art.

## Claims

1. An assembling machine comprising a succession of working and mounting stations (15, 16, 17), disposed along a circular path, and a powered horizontal ring (12) for transport of loading units (18) along said circular path, the loading units resting on the ring (12) so as to be driven in rotation and stop units (25) being disposed along the ring, the stop units (25) having means (29) drivable upon command for selective release of the loading units (18) from the ring (12), thereby stopping the loading units independently of the rotation of the ring, wherein the assembling machine further comprises a bar (26) disposed around the circular path and on which the stop units (25) are slideably supported, the stop units comprising means (28) for releasable locking thereof to the bar (26).

2. A machine as claimed in claim 1, **characterised in that** the drivable means (29) of the stop units (25) are means for lifting the loading units from the ring.

3. A machine as claimed in Claim 2, **characterised in that** the derivable means for lifting the loading units from the ring comprises centring members (29) at the sides of the ring that are powered to be vertically movable under the loading units (18) to lift them against upper stop abutments (32, 33).

4. A machine as claimed in claim 1, **characterised in that** the horizontal ring comprises a guide groove (21) at the upper part thereof, in which a foot (22) projecting from the loading unit is inserted with a small side play.

5. A machine as claimed in claim 1, **characterised in that** for rotation along the circular path, the horizontal ring comprises a guide (19) at the lower part thereof which slides in supports (13) provided with ball bearings.

6. A machine as claimed in claim 1, **characterised in that** for rotation of the ring, a power unit (14) is present which is provided with a pinion gear (23) fitting in the periphery of the ring.

## Patentansprüche

1. Montagemaschine umfassend eine Folge von Arbeits- und Bestückungsstationen (15, 16, 17), die entlang einer Kreisbahn angeordnet sind, und einen angetriebenen horizontalen Ring (12) für einen Transport von Beladeeinheiten (18) entlang der Kreisbahn, wobei die Beladeeinheiten auf dem Ring (12) aufliegen, so dass sie in Rotation versetzt werden, und Stopp-Einheiten (25), die entlang des Rings angeordnet sind, wobei die Stopp-Einheiten (25) auf Befehl antreibbare Hilfsmittel (29) zur wahlweisen Freigabe der Beladeeinheiten (18) vom Ring (12) aufweisen, um **dadurch** die Beladeeinheiten unabhängig von der Rotation des Rings zu stoppen, wobei die Montagemaschine ferner eine um die Kreisbahn angeordnete Schiene (26) umfasst, auf der die Stopp-Einheiten (25) verschiebbar gelagert sind, und wobei die Stopp-Einheiten Mittel (28) zur lösbaren Verriegelung derselben an der Schiene (26) umfassen.

2. Maschine nach Anspruch 1,
**dadurch gekennzeichnet, dass** die antreibbaren Mittel (29) der Stopp-Einheiten (25) Mittel zum Anheben der Beladeeinheiten vom Ring sind.

3. Maschine nach Anspruch 2,
**dadurch gekennzeichnet, dass** die antreibbaren Mittel zum Anheben der Beladeeinheiten vom Ring Zentrierungselemente (29) an den Seiten des Rings umfassen, die dazu angetrieben sind, um unter den Beladeeinheiten (18) vertikal verfahrbar zu sein, um diese gegen obere Stopanschläge (32, 33) anzuheben.

4. Maschine nach Anspruch 1,
**dadurch gekennzeichnet, dass** der horizontale Ring eine Führungsnut (21) im oberen Teil desselben umfasst, in welche ein von der Beladeeinheit vorstehender Fuß (22) mit geringem seitlichen Spiel eingefügt ist.

5. Maschine nach Anspruch 1,
**dadurch gekennzeichnet, dass** zur Rotation entlang der Kreisbahn der horizontale Ring eine Führung (19) an seinem unteren Teil umfasst, welche in mit Kugellagern ausgestatteten Lagern (13) gleitet.

6. Maschine nach Anspruch 1,
**dadurch gekennzeichnet, dass** zur Rotation des Rings eine Antriebseinheit (14) vorgesehen ist, welche mit einem in den Umfang des Rings eingreifenden Zahnrad (23) versehen ist.

## Revendications

1. Machine d'assemblage comprenant une succession de postes d'usinage et de montage (15, 16, 17), disposés le long d'un trajet circulaire, et un anneau horizontal motorisé (12) pour le transport d'unités de chargement (18) le long dudit trajet circulaire, les unités de chargement reposant sur l'anneau (12) afin d'être entraînées en rotation et des unités d'arrêt (25) disposées le long de l'anneau, les unités d'arrêt (25) possédant des moyens (29) entraînables sur commande pour libérer sélectivement les unités de chargement (18) de l'anneau (12), arrêtant ainsi les unités de chargement indépendamment de la rotation de l'anneau, dans lequel la machine d'assemblage comprend en outre une barre (26) disposée autour du trajet circulaire et sur laquelle les unités d'arrêt (25) sont supportées de façon coulissante, les unités d'arrêt comprenant des moyens (28) pour le verrouillage libérable de celles-ci à la barre (26).

2. Machine selon la revendication 1, **caractérisée en ce que** les moyens entraînables (29) des unités d'arrêt (25) sont des moyens pour lever les unités de chargement à partir de l'anneau.

3. Machine selon la revendication 2, **caractérisée en ce que** les moyens entraînables pour lever les unités de chargement à partir de l'anneau comprennent des éléments de centrage (29) sur les côtés de l'anneau qui sont motorisés pour être mobiles verticalement sous les unités de chargement (18) pour les lever contre des butées d'arrêt supérieures (32, 33).

4. Machine selon la revendication 1, **caractérisée en ce que** l'anneau horizontal comprend une rainure de guidage (21) dans la partie supérieure de celui-ci, dans lequel un pied (22) faisant saillie de l'unité de chargement est inséré avec un faible jeu latéral.

5. Machine selon la revendication 1, **caractérisée en ce que**, pour la rotation le long du trajet circulaire, l'anneau horizontal comprend un guidage (19) dans sa partie inférieure qui coulisse dans des supports (13) pourvus de paliers à billes.

6. Machine selon la revendication 1, **caractérisée en ce que**, pour la rotation de l'anneau, une unité motorisée (14) est présente qui est pourvue d'un engrenage à pignon (23) s'ajustant dans la périphérie de l'anneau.
